(19) **Europäisches Patentamt**
**European Patent Office**
**Office européen des brevets**

(11) **EP 2 445 168 A1**

(12) **EUROPEAN PATENT APPLICATION**

(43) Date of publication:
**25.04.2012 Bulletin 2012/17**

(51) Int Cl.:
*H04L 29/06* (2006.01)   *H04N 7/14* (2006.01)
*H04N 21/2343* (2011.01)   *H04N 21/258* (2011.01)
*H04N 21/658* (2011.01)   *H04N 21/2662* (2011.01)

(21) Application number: **11196071.2**

(22) Date of filing: **12.03.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **22.10.2008 GB 0819389**
**12.03.2008 PCT/IB2008/001353**

(62) Document number(s) of the earlier application(s) in
accordance with Art. 76 EPC:
**09719364.3 / 2 272 237**

(71) Applicant: **Skype**
**Dublin 2 (IE)**

(72) Inventor: **Jefremov, Andrei**
**17762 Jarfalla (SE)**

(74) Representative: **Driver, Virginia Rozanne**
**Page White & Farrer**
**Bedford House**
**John Street**
**London WC1N 2BF (GB)**

Remarks:
This application was filed on 29-12-2011 as a
divisional application to the application mentioned
under INID code 62.

(54) **Method of transmitting data in a communication system**

(57)    A method of transmitting image data in a video call from a first node to a second node, wherein the second node comprises a display for displaying image data at the second node, said method comprising; receiving at the first node, information indicating at least one display characteristic with which image data received at the second node will be displayed on said display; inputting image data at the first node; determining a processing step to be applied to the inputted image data to generate adapted image data, such that at least one characteristic of the adapted image data is optimised for said at least one display characteristic; applying the processing step to generate the adapted image data; and transmitting the adapted image data to the second terminal. The determination of the processing step comprises determining an encoding parameter for encoding the input image data based on the display characteristic. The display characteristic comprises a colour depth of the display, and the encoding parameter relates to a level of colour information.

FIG. 2

**Description**

Field of the Invention

The present invention relates to a method and system for transmitting and receiving data in a communication system. More particularly, the present invention relates to a method and apparatus for transmitting and receiving image data to be output to a user on a display.

Background of the Invention

In a communication system a communication network is provided, which can link together at least two communication terminals so that the terminals can send information to each other in a call or other communication event. Information may include speech, text, images or video.

Digital communication systems are based on the transmission of digital signals. Analogue signals such as light waves are input into a recording device such as a camera and recorded by an image sensor such as a charged coupled device (CCD) in the camera. Data recorded by the image sensor is then converted into digital data by an analogue to digital converter. The digital signal is then encoded and placed into data packets for transmission over a communication network.

Each data packet includes a header portion and a payload portion. The header portion of the data packet contains data for transmitting and processing the data packet. This information may include an identification number and source address that uniquely identifies the packet, a header checksum used to detect processing errors and the destination address. The payload portion of the data packet includes the encoded video data intended for transmission.

The transmission of high quality images, such as those with a high resolution, may require large amounts of data to be encoded and transmitted via the communication network, particularly during real time communication events such as video calls and video streaming. This consumes a large amount of CPU (Central Processing Unit) resource of the transmitting terminal and of the receiving terminal which in turn increases the power consumption of the terminals. The transmission of large amounts of data will also consume the bandwidth of network, thereby increasing introducing packet loss and delay.

The transmission of high quality images may require complex compression methods to encode the data, such encoding methods may again consume a large amount of CPU resource.

A further problem with transmitting high quality images is that this can overload the CPU resources of the terminals thereby adversely affecting the operation of the terminal to display the image and perform other processing functions.

The burden on the CPU resources of the terminals may be alleviated by sending data at a low resolution. However this can also adversely affect the quality of the displayed image. This is particularly noticeable to a user when the display screen on which the image is displayed is large and has a high resolution.

It is therefore an aim of the present invention to overcome the above identified problems by efficiently encoding and transmitting information over the network without affecting the perceived quality of the image displayed at the receiving terminal.

It is a further aim of the invention to improve the perceived quality of the image data when it is displayed at a receiving terminal.

Summary of the invention

According to a first aspect of the present invention there is provided a method of transmitting image data from a first node to a second node during a communication event, wherein the second node comprises a display for displaying image data at the second node, said method comprising;
receiving at the first node, information indicating at least one display characteristic with which image data received at the second node will be displayed on said display;
inputting image data at the first node;
determining a processing step to be applied to the inputted image data to generate adapted image data, such that at least one characteristic of the adapted image data is optimised for said at least one display characteristic;
applying the processing step to generate the adapted image data; and transmitting the adapted image data to the second terminal.

According to a second aspect of the present invention there is provided a method of transmitting image data from a first node to a second node during a communication event, wherein the second node comprises a display for displaying image data at the second node, said method comprising;
receiving at the first node, information indicating at least one display characteristic with which image data received at the second node will be displayed on said display; inputting image data at the first node;

determining a processing step to be applied to the inputted image data to generate adapted image data, such that an acceptable quality threshold is met when the adapted image data is displayed with the display characteristic;

applying the processing step to generate the adapted image data; and transmitting the adapted image data to the second terminal.

According to a third aspect of the invention there is provided a transmitting terminal arranged to transmit image data to a receiving terminal during a communication event, wherein the receiving terminal comprises a display for displaying image data, said transmitting terminal comprising:

a receiver for receiving information indicating at least one display characteristic with which image data received at the receiving terminal will be displayed on said display;

an image inputting system for inputting image data at the transmitting terminal; a control block for determining a processing step to be applied to the inputted image data to generate adapted image data, such that at least one characteristic of the adapted image data is optimised for said at least one display characteristic;

a processing block for applying the processing step to generate the adapted image data; and

a transmitter for transmitting the adapted image data to the second terminal.

According to a fourth aspect of the present invention there is provided a receiving terminal for receiving image data transmitted from a transmitting terminal during a communication event, said receiving terminal comprising:

a display for displaying image data received by the receiving terminal, a display reporter unit arranged to determine information indicating a display characteristic with which image data received at the second node will be displayed on said display; and

a transmitter for transmitting said information indicating said display characteristic to the transmitting terminal, such that the transmitting terminal may adapt the image data to be transmitted to the receiving terminal in order to optimise at least one characteristic of the image for said at least one display characteristic.

One advantage of embodiments of the present invention is that the resolution of the image may be adapted to increase only when this is necessary to maintain an acceptable level of quality of the displayed image.

Furthermore the data in the encoded image may be optimised according to the manner in which it is displayed at the receiving terminal.

Brief Description of Drawings

For a better understanding of the present invention and to show how the same may be carried into effect, embodiments of the present invention will now be described with reference to the following drawings:

Figure 1 shows a communication network;
Figure 2 shows a first user terminal and a second user terminal in more detail;
Figure 3 shows transmitting circuitry of a user terminal in accordance with an embodiment of the invention;
Figure 4 shows receiving circuitry of a user terminal in accordance with an embodiment of the invention;
Figure 5 shows a flowchart according to an embodiment of the invention;
Figure 6 shows a display screen having dimensions h x w;
Figure 7 shows a flowchart according to a further embodiment of the invention;
Figure 8 shows a flowchart according to a further embodiment of the invention;
Figure 9 is a diagram showing the aspect ratio of an image display area;
Figure 10 is a diagram showing the aspect ratio of an image;
Figure 11 is a diagram showing the aspect ratio of an encoded image.
Figure 12 is a diagram showing transmitting circuitry according to a further embodiment of the invention; and
Figure 13 shows a flowchart according to a further embodiment of the invention.

Detailed Description of the Invention

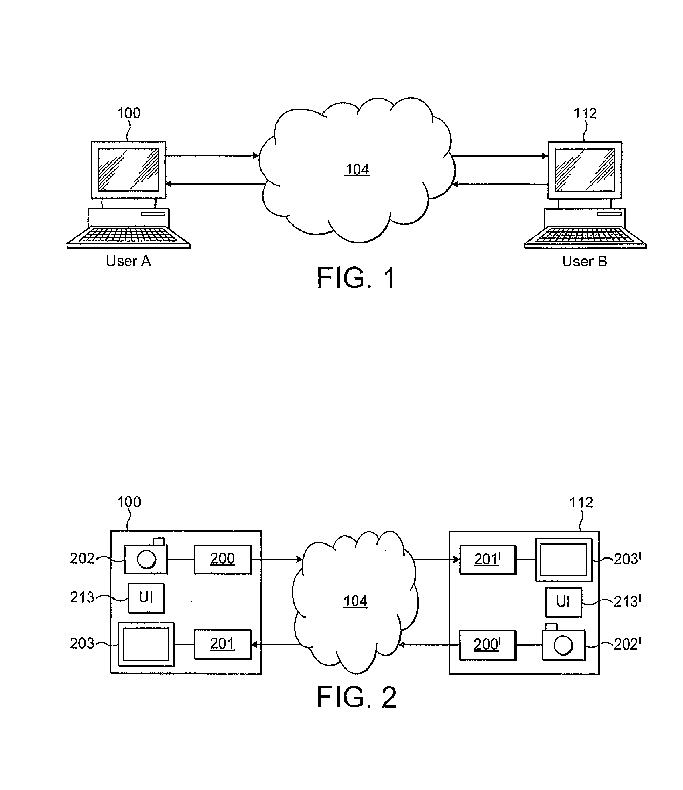

Figure 1 shows a first node 100 and a second node 112 connected to a communication network 104. In the described embodiment, the first node 100 is a first user terminal operated by User A, and the second node 112 is a second user terminal 112 is operated by User B. In an alternative embodiment the first node 100 may be a server arranged to provide media content to the user terminal 112. In one embodiment of the invention the communication network 104 is the internet.

The user terminals 100, 112, may be a personal computer, a gaming device, a personal digital assistant, a suitably enabled mobile phone, a television, or another device able to output image data on an integrated or peripheral display. The terminals may be connected to the network via a wired or wireless connection that employs a particular access technology such as Ethernet, WiFi, WiMax (Worldwide Interoperability for Microwave Access), or 3G (third generation).

A communication event, such as a video call, may be set up between the first user terminal 100 and the second user terminal 112. During the video call, video data is transmitted between the user terminals via the communication network 104.

Reference will now be made to Figure 2. Figure 2 shows the first user terminal 100 and the second user terminal in more detail. The first user terminal 100 comprises: an image input system 202 for capturing image data; transmitting circuitry 200 for transmitting the image data via the network 104; receiving circuitry 201 for receiving image data from the network 104; a display screen 203 for displaying the image data and a user interface (UI) device 213 for receiving an input from User A. Similarly the second user terminal contains transmitting circuitry 200', receiving circuitry 201', an image input system 202', a display screen 203' and a UI device 213'.

The following description will describe the transmission of image data from the first user terminal 100 to the second user terminal 112. However it should be readily appreciated that the second user terminal may also be arranged to transmit image data to the first user terminal in accordance with the method described below.

The transmitting circuitry of first user terminal 100 is arranged to receive image data from the image input system 202 and to transmit the image data to the second user terminal 112.

In a preferred embodiment of the invention the image input system 202, 202' is a video camera. Video data is transmitted from the first user terminal 100 to the second user terminal 112, via the network 104. The receiving circuitry 201' of the second user terminal 112 is arranged to receive the video data from the network 104 and to output the video data on the display screen 203.'

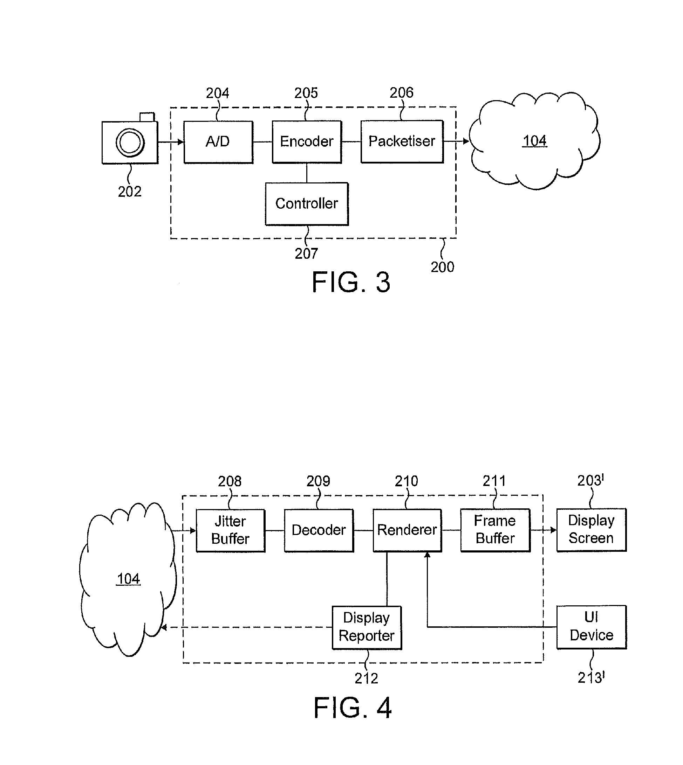

Figure 3 shows the transmitting circuitry 200, 200' in more detail. The transmitting circuitry comprises an analogue to digital converter 204, an encoder 205, a packetiser 206 and a control block 207.

Figure 4 shows the receiving circuitry 201, 201' in more detail. The receiving circuitry comprises a jitter buffer 208, a decoder 209, a renderer 210, a display reporter unit 212 and a frame buffer 211.

The analogue to digital converter 204 in the first user terminal 100, receives an analogue representation of an image captured by an image sensor of the video camera 202. The analogue to digital converter 204 is arranged to convert the image into a digital signal. The digital signal is then encoded by the encoder 205 under the control of the control block 207. The operation of the control block will be described in detail herein after.

The packetiser 206 receives the encoded video data from the encoder 205. and places the encoded video data into data packets. The data packets are then transmitted to the second terminal 112 via the network 104.

Data packets received at the second terminal 112 via the communication network are input into the jitter buffer 208. The jitter buffer 208 buffers data packets received from the network 104 and outputs the buffered data packets to the decoder 209. The decoder 209 is arranged to decode the encoded video data and to provide the decoded data to the renderer 210. The renderer is arranged to write information to the frame buffer 211. Video data written into the frame buffer is displayed on the display screen 203.

The inventors of the present invention have found that information relating to the how the image is displayed at the receiving terminal may advantageously be used at the transmitting terminal to control how the image is encoded.

For example, information relating to how the image is displayed may be used to optimise an encoding parameter used to encode the image such that an acceptable level of perceived quality for the image displayed is achieved.

For example the resolution at which the image is encoded may be controlled to be equivalent to the resolution at which the image is displayed at the receiving terminal.

According to exemplary embodiments of the invention, information relating to the manner in which the image data is displayed at the second user terminal 112 is reported by the display reporter unit 212 to the first user terminal 100. The control block 207 at the first user terminal may then control the encoder to adapt the image sent to the second terminal in dependence on the reported manner in which the image data is displayed.

Embodiments described hereinafter refer in general to adapting the resolution of the image sent to the second terminal in dependence on the display information. However it should be appreciated that in further embodiments of the invention the control block may be arranged to adapt, for example, the resolution, the bit rate, the frame rate or the compression complexity of the image data transmitted to the second terminal.

According to one embodiment of the invention, the display reporter unit 212 may be arranged to report the resolution of the display screen 203' of the second terminal 112, to the first terminal 100. In response, the control block of the first terminal may determine the resolution at which the image should be encoded. The controller may determine that if the resolution is above a predetermined threshold the image should be encoded at a high resolution, whereas if the resolution is below a predetermined threshold the image should be encoded at a low resolution.

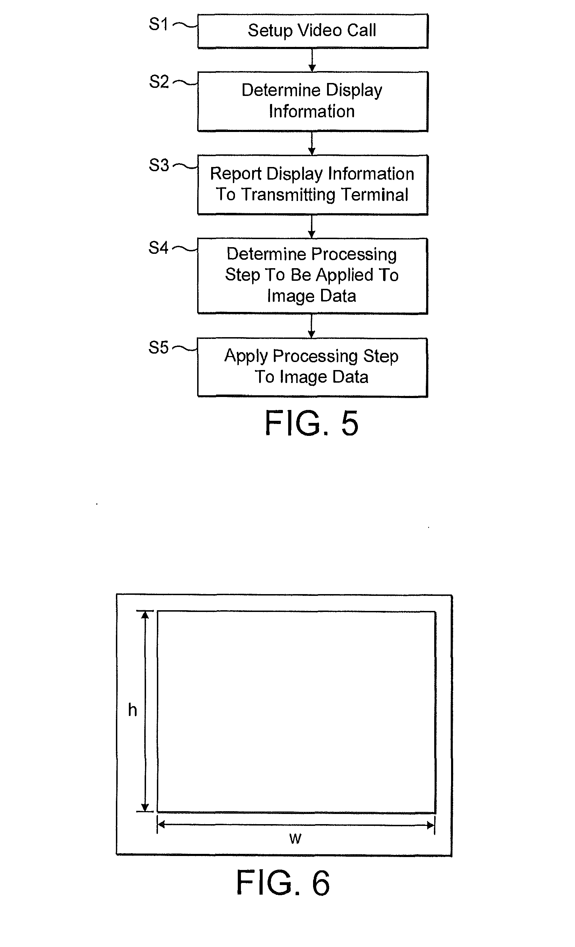

According to a further embodiment of the invention image data may be adapted according to the size of the area in which the image is displayed. This will be exemplified with reference to the flowchart shown in Figure 5.

In step S1 a communication event such as a video call is set up between the first user terminal and the second user terminal.

In step S2 the display reporter unit 212 in the second terminal is arranged to determine information relating to the manner in which data received from the first user terminal will be displayed, hereinafter referred to as 'display information'. For example the display reporter unit 212 may determine information relating to the dimensions of the display screen 203. In this case the display reporter unit 212 in the second user terminal may be arranged to report the physical height h and the width w of the display screen, as shown in Figure 6. In a preferred embodiment the display reporter unit 212 is also arranged to determine the resolution of the display screen. The dimensions and resolution of the display screen may be retrieved from a local memory of the second user terminal.

In step S3 the display information is reported from the display reporter unit 212 of the second user terminal, to the first terminal. The display information transmitted from the second terminal may be sent together with video data that is transmitted to the first user terminal from the second user terminal.

In step S4 the display information provided from the second user terminal is provided to the control block 207 of the first user terminal. The control block is arranged to determine the resolution that is appropriate for the manner in which the image data is displayed.

The resolution may be determined using an algorithm that computes the required resolution as a function of the display information.

For example the required resolution of the transmitted image may be calculated according to Equation (1)

$$\text{image resolution} = K(h, w) \times \text{screen resolution} \qquad (1)$$

Where the image resolution is the total number of pixels in the image; where the screen resolution is the total number of pixels in the screen and where K is a value between 0 and 1, such that the resolution of the transmitted image does not exceed the resolution of the display. The value of K may approach 1 for larger values of screen height (h) and width (w). K may be derived empirically based on perception quality evaluation testing.

Alternatively the required resolution may be determined by a look up table stored in a memory accessible to the control block. The look up table will define an acceptable transmitted image resolution for a given display resolution and area.

In step S5 the control block is arranged to control the encoder to encode the data at the required resolution. This may be achieved, for example by reducing the frame rate or increasing the bit rate available to the encoder. The maximum resolution that may be applied to the image may be limited to the resolution of the image provided from the video camera.

In an alternative embodiment of the invention the image data may be displayed in a portion of the display screen 203, in a graphical display window, wherein the dimensions of the graphical display window may be controlled by the user of the second user terminal.

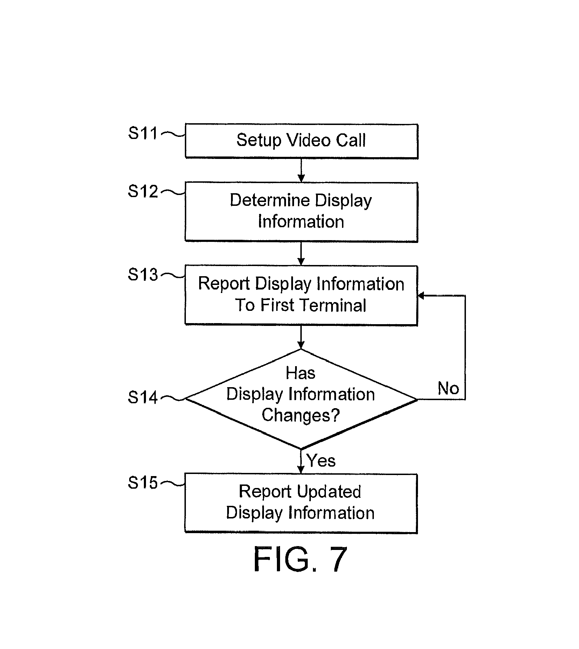

As shown in Figure 4, the renderer block receives an input from the user interface (UI) device 213 of the second terminal to control the size of the window in which the image data is displayed. The UI device of the second terminal may be a keyboard, mouse, touch screen or any other interface means suitable for controlling the dimensions of the display window. This embodiment of the invention is described with reference to the flow chart shown in Figure 7.

In step S11 a communication event such as a video call is set up between the first terminal and the second terminal.

In step S12 the display reporter unit is arranged to determine the size of the window. This may be determined for example from the renderer 210 or reported from a module used to generate the graphical window (not shown).

In step S13 the display reporter unit is arranged to report the display information to the first user terminal.

In step S14 the reporting module is arranged to monitor the renderer to determine whether the size of the display window has changed since the size of the display window was reported to the first terminal in step S13.

In step S15, if it is determined that the display window has changed size, the reporting module is arranged to transmit updated dimensions of the display window to the first user terminal 100 such that the encoder may be controlled to adapt the resolution at which the image data is encoded.

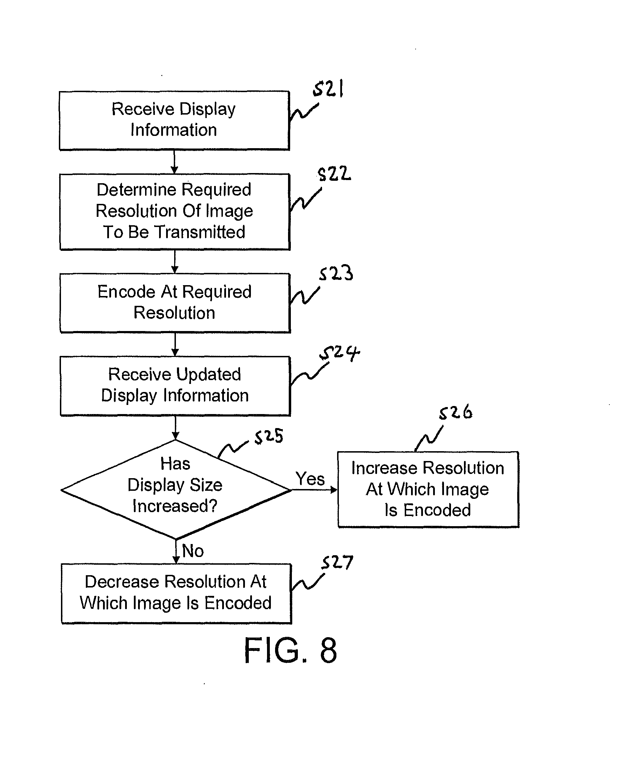

Figure 8 shows a flowchart describing the method steps implemented in the receiver in response to receiving display information transmitted according the method described in relation to Figure 7.

In step S21 the first user terminal receives display information relating to the dimensions of the window in which the image data is to be displayed.

In step S22 the control block is arranged to determine the required resolution of the image to be transmitted, such that an acceptable quality threshold is met when the image is displayed in a window with the reported window dimensions. The required resolution may be determined according to an algorithm or look up table.

In step S23 the control block is arranged to control the encoder to encode the data at the required resolution.

In step S24 the control block receives updated display window dimensions from the second user terminal 112.

In step S25 the control block is arranged to determine if the area of the display window has increased or decreased.

In step S26 if it is determined that the area of the display window has increased, the control block is arranged to control the encoder to increase the resolution at which the image data is encoded.

In step S27, if it is determined that the area of the display window has decreased, the control block is arranged to control the encoder to decrease the resolution at which the image data is encoded.

In one embodiment of the invention, User B of the second terminal may control the proportion of the image displayed in the display window such that User B may zoom in and out of the received image data.

According to an embodiment of the invention the display reporter unit is arranged to report the proportion of the image that is displayed in the display. According to this embodiment of the invention the control block is arranged to determine the magnification applied to the image from the reported display window dimensions and the proportion of the image displayed in the display window. The required resolution is then determined using an algorithm or a look up table. For example, if it is determined that the magnification applied at the renderer to the actual size of the image transmitted is more than 1 the data is encoded with a high resolution. Conversely, if it is determined that the magnification applied to the actual size of the image is less than one the encoder is controlled to encode the image with a lower resolution.

In a further embodiment of the invention, when only a portion of the image is displayed in the graphical display window the display reporter unit 212 is arranged to provide an indication of the location of the portion of the image displayed within the complete image. For example the display reporter unit 212 may be arranged to report coordinates defining the location of the displayed portion of the image. In this case the encoder may be controlled to encode only the identified area at the higher resolution. The remaining portions of the image may be encoded at a lower bit rate or cropped before the image is transmitted, such that the total bit rate required to encode the image is not necessarily increased.

In a further embodiment of the invention the display reporter unit 212 is arranged to report information indicating the colour depth of the screen. This describes the number of bits used to represent colour for one pixel. In response to receiving the colour depth information from the second terminal, the first terminal is arranged to control the encoded image data to be optimised for the reported colour depth. For example if the reported colour depth of the display is high the image may be encoded with a high colour depth, for example wherein more bits are used to represent colour than if the reported colour depth of the screen is low.

In a further embodiment of the invention the display reporter unit 212 is arranged to report information indicating the screens ability to represent light nuances. In response to receiving this information from the second terminal, the first terminal is arranged to control the encoded image data to be optimised for the screens ability to represent light. For example if the screen is able to represent light at a high quality, the image may be encoded to preserve light nuances, wherein for example more bits are used represent levels of light than if the screen is only able to represent light nuances at a lower quality.

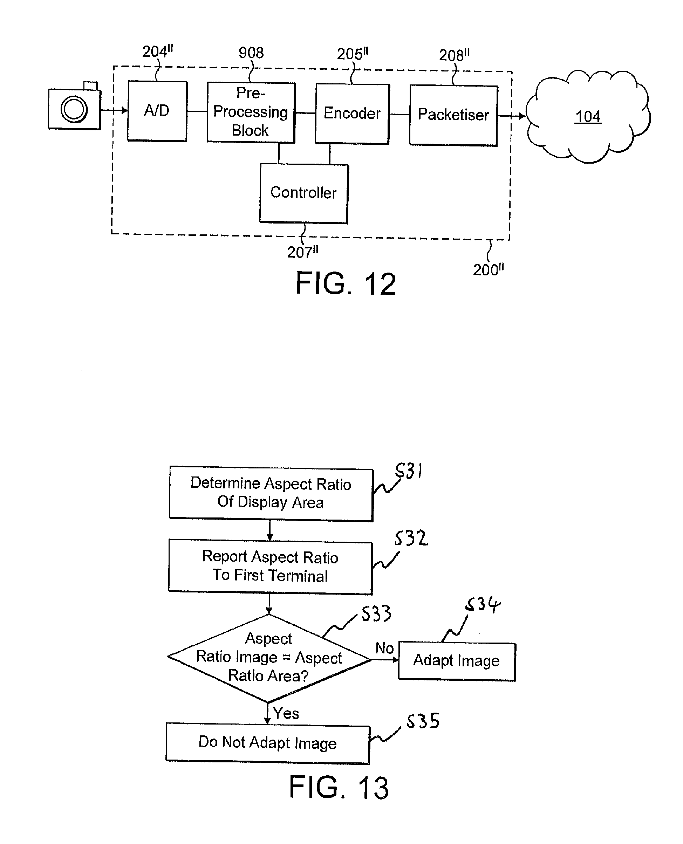

Reference is now made to Figure 12 which shows the transmitting circuitry of the user terminal according to a further embodiment of the invention. As shown in Figure 12 the transmitting circuitry 200''' further comprises an adaptation block 908 that is arranged to process the signal before it is input into the encoder.

In one embodiment of the invention the control unit may be arranged to control the adaptation block 908 in response to receiving information relating to the aspect ratio of the window in which the image is displayed at the second terminal. This will be described with reference to the flowchart shown in Figure 13.

In step S31 the display reporter unit determines the aspect ratio of the area in which the image is displayed. This may be the area of a graphical window selected by a user, or the fixed aspect ratio of the display screen.

In step S32 the display reporter unit is arranged to report the aspect ratio of the display area to the first terminal.

In step S33 the control block is arranged to compare the aspect ratio of the area in which the image will be displayed to the aspect ratio of the image received from the video camera to determine if the aspect ratios are equivalent.

In step S34 if it is determined that the aspect ratio of the image received from the camera is different from the aspect ratio of the display area, the control block is arranged to control the adaptation block 908 to add black areas to the image received from the camera such that the entire image has the same aspect ratio as the reported display area and the image provided from the camera retains its aspect ratio.

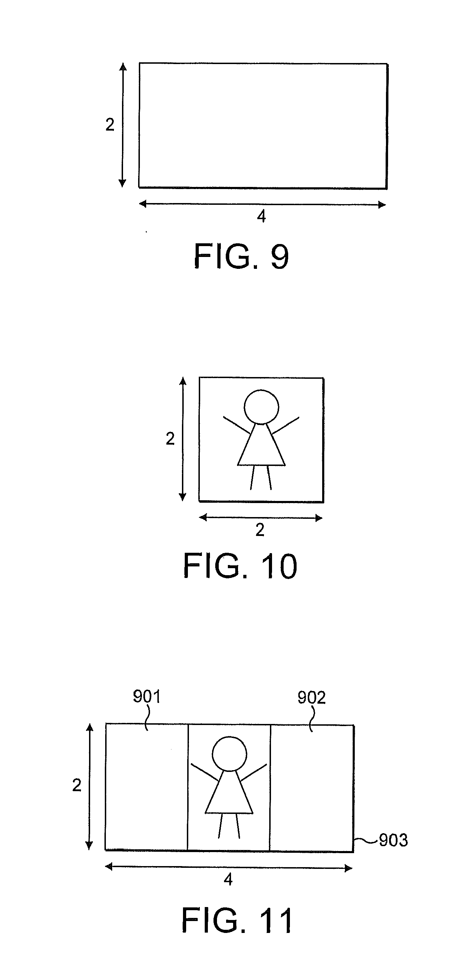

For example if the aspect ratio of the display screen is 2:4 as shown in Figure 9 and the aspect ratio of the camera image is 2:2 as shown in Figure 10 the adaptation block is arranged to add black areas 901 and 902 to the entire encoded image 903 such that the aspect ratio of the entire encoded image is 2:4.

In step S35 if it is determined that the aspect ratio of the image received from the video camera is equivalent to the aspect ratio of the display area the image is not adapted by the encoder.

In this case the image may be displayed at the second terminal with the correct aspect ratio without the need for the receiving circuitry in the second terminal to apply further image processing steps. This is particularly advantageous where the receiving circuitry in the receiving terminal is not capable of adapting the aspect ratio of the received image locally.

In an alternative embodiment of the invention the adaptation block may be arranged to adapt the image such that the image is a monochrome image in response to receiving display information indicating that the image will be displayed in monochrome.

According to a further embodiment of the invention the image input system comprises a screen sharing module. The screen sharing module is arranged to capture as image data the image displayed on display screen 203 at the first user terminal. The image data captured from the screen may then be transmitted to the second user terminal in accordance with any of the methods described above.

Display information may be reported from the second terminal explicitly, for example as an absolute value or a range. However display information may also be reported implicitly, for example the second terminal may report a device identity or software version identity from which the first terminal can derive information relating to the display 203' at the second terminal. In this case information relating to how the image data should be adapted for the display at the second terminal is pre-stored in a local memory of the first terminal.

In an alternative embodiment of the invention the adaptation block 908 may form part of the encoder.

In embodiments of the present invention the required processing may be implemented as hardware or by using appropriately adapted software executed on a processor. Software for implementing the invention may be stored on and provided by means of a carrier medium such as a carrier disc, card or tape. A possibility is to download the software via a network such as the Internet. This is an implementation preference.

While this invention has been particularly shown and described with reference to preferred embodiments, it will be understood to those skilled in the art that various changes in form and detail may be made without departing from the scope of the invention as defined in the claims.

**Claims**

1. A method of transmitting image data in a real time video call from a first node to a second node, wherein the second node comprises a display for displaying image data at the second node, said method comprising;
   receiving at the first node, information indicating at least one display characteristic with which image data received at the second node will be displayed on said display;
   inputting image data at the first node;
   determining a processing step to be applied to the inputted image data to generate adapted image data, such that at least one characteristic of the adapted image data is optimised for said at least one display characteristic, the determination of the processing step comprising determining an encoding parameter for encoding the input image data based on the display characteristic;
   applying the processing step to generate the adapted image data; and transmitting the adapted image data to the second terminal;
   wherein the display characteristic comprises a colour depth of the display, and the encoding parameter relates to a level of colour information, such that if the colour depth of the display is high the image data is encoded with a high colour depth wherein more bits are used to represent colour than if the colour depth of the display is low.

2. A method as claimed in claim 1 wherein the display characteristic comprises one of: a resolution of the display; a size of an area of the display in which at least a portion of the received image data is displayed; a capacity to represent light nuances on the display; a screen depth of the display; an aspect ratio of an area of the display in which the received image is displayed; magnification to be applied to the received image data; or a portion of the received image data to be displayed.

3. A method as claimed in claim 2 wherein the encoding parameter relates to one of a level of light information; a resolution value; an aspect ratio; a frame rate; a compression complexity of the adapted image; bit rate.

4. A method as claimed in any preceding claim, wherein the display characteristic is updated during the communication event.

5. A method as claimed in claim 6, wherein the encoding parameter is updated in response to the receiving information indicating the updated display characteristic.

6. A method as claimed in claim any preceding claim, wherein the encoding parameter is determined according to a function of the display characteristic.

7. A method as claimed in claim any of claims 1 to 5, wherein the step of determining the encoding parameter comprises:

   querying a look up table with the display characteristic; and
   retrieving the encoding parameter at which the inputted image is to be encoded.

8. A method as claimed in any preceding claim wherein determining a processing step to be applied to the inputted image data to generate adapted image data, such that at least one characteristic of the adapted image data is optimised for said at least one display characteristic achieves an acceptable level of perceived quality for the image displayed.

9. A method as claimed in any preceding claim wherein the step of applying the processing step to generate the adapted image data comprises:

   encoding the image data according to the determined encoding parameter.

10. A method as claimed in any preceding claim wherein the image data is captured from a camera.

11. A method as claimed in any preceding claim wherein the image data is screen sharing data.

12. A transmitting terminal arranged to transmit image data to a receiving terminal during a real time video call, wherein the receiving terminal comprises a display for displaying image data, said transmitting terminal comprising:

   a receiver for receiving information indicating at least one display characteristic with which image data received at the receiving terminal will be displayed on said display;
   an image inputting system for inputting image data at the transmitting terminal;
   a control block for determining a processing step to be applied to the inputted image data to generate adapted image data, such that at least one characteristic of the adapted image data is optimised for said at least one display characteristic, the determination of the processing step comprising determining an encoding parameter for encoding the input image data based on the display characteristic;
   a processing block for applying the processing step to generate the adapted image data; and
   a transmitter for transmitting the adapted image data to the second terminal;

   wherein the display characteristic comprises a colour depth of the display, and the encoding parameter relates to a level of colour information, such that if the colour depth of the display is high the image data is encoded with a high colour depth wherein more bits are used to represent colour than if the colour depth of the display is low.

13. A method as claimed in claim 12 wherein the transmitting terminal is one of: an end user node, a server relaying image data from an end user node, a server distributing pre-stored image data.

14. A receiving terminal for receiving image data transmitted from a transmitting terminal during a real time video call, said receiving terminal comprising:

   a display for displaying image data received by the receiving terminal;
   a display reporter unit arranged to determine information indicating a display characteristic with which image data received at the second node will be displayed on said display; and
   a transmitter for transmitting said information indicating said display characteristic to the transmitting terminal, such that the transmitting terminal may adapt the image data to be transmitted to the receiving terminal in order to optimise at least one characteristic of the image for said at least one display characteristic, the adaption comprising determining an encoding parameter for encoding the input image data based on the display characteristic;

   wherein the display characteristic comprises a colour depth of the display, and the encoding parameter relates to a level of colour information such that if the colour depth of the display is high the image data is encoded with a high colour depth wherein more bits are used to represent colour than if the colour depth of the display is low.

**15.** A computer program product comprising program code means which when executed by a computer implement the steps according to the method of any of claims 1 to 11.

100

112

User A

FIG. 1

User B

100

112

202

213

203

200

UI

201

104

201'

UI

200'

203'

213'

202'

FIG. 2

204       205       206

A/D    →    Encoder    →    Packetiser    →    104

202

Controller

207

200

# FIG. 3

208       209       210       211       203'

104    →    Jitter Buffer    →    Decoder    →    Renderer    →    Frame Buffer    →    Display Screen

Display Reporter

UI Device

212       213'

# FIG. 4

S1 — Setup Video Call

S2 — Determine Display Information

S3 — Report Display Information To Transmitting Terminal

S4 — Determine Processing Step To Be Applied To Image Data

S5 — Apply Processing Step To Image Data

# FIG. 5

# FIG. 6

S11 — | Setup Video Call |

S12 — | Determine Display
Information |

S13 — | Report Display Information
To First Terminal |

S14 — < Has
Display Information
Changes? >    No

Yes

S15 — | Report Updated
Display Information |

# FIG. 7

```
                          ┌──────────────────────┐      S21
                          │   Receive Display    │
                          │     Information      │
                          └──────────────────────┘
                                     │
                                     ▼
                          ┌──────────────────────┐      S22
                          │  Determine Required  │
                          │  Resolution Of Image │
                          │   To Be Transmitted  │
                          └──────────────────────┘
                                     │
                                     ▼
                          ┌──────────────────────┐      S23
                          │  Encode At Required  │
                          │      Resolution      │
                          └──────────────────────┘
                                     │
                                     ▼
                          ┌──────────────────────┐      S24
                          │   Receive Updated    │
                          │  Display Information  │
                          └──────────────────────┘
                                     │       S25
                                     ▼                                    S26
                              ◇──────────────◇
                             ╱      Has        ╲       Yes    ┌──────────────────┐
                            ◇   Display Size    ◇────────────▶│ Increase Resolution│
                             ╲   Increased?    ╱              │  At Which Image   │
                              ◇──────────────◇               │    Is Encoded     │
                                     │ No                     └──────────────────┘
                                     ▼
                          ┌──────────────────────┐      S27
                          │  Decrease Resolution At │
                          │  Which Image Is Encoded │
                          └──────────────────────┘
```

# FIG. 8

14

FIG. 9

FIG. 10

FIG. 11

204'' 908 205'' 208''

| A/D | Pre-Processing Block | Encoder | Packetiser |

104

Controller

207'' 200''

# FIG. 12

Determine Aspect Ratio Of Display Area — S31

Report Aspect Ratio To First Terminal — S32

Aspect Ratio Image = Aspect Ratio Area? — S33

No → Adapt Image — S34

Yes ↓

Do Not Adapt Image — S35

# FIG. 13

**EP 2 445 168 A1**

Europäisches
Patentamt
European
Patent Office
Office européen
des brevets

# EUROPEAN SEARCH REPORT

Application Number

EP 11 19 6071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 2 405 768 A (VODAFONE PLC [GB]) 9 March 2005 (2005-03-09) * page 3, line 17 - page 4, line 12 * * page 1, line 10 - line 25 * * page 12, line 1 - line 12 * * claim 10 * ----- | 1-15 | INV. H04L29/06 H04N7/14 H04N21/2343 H04N21/258 H04N21/658 H04N21/2662 |
| Y | EP 1 463 323 A (BROADCOM CORP [US]) 29 September 2004 (2004-09-29) * paragraph [0062] - paragraph [0078] * * figures 1-3,9A * ----- | 1-15 | |
| A | TURNER ET AL: "Policies and conflicts in call control", COMPUTER NETWORKS, ELSEVIER SCIENCE PUBLISHERS B.V., AMSTERDAM, NL, vol. 51, no. 2, 10 November 2006 (2006-11-10), pages 496-514, XP005758514, ISSN: 1389-1286, DOI: 10.1016/J.COMNET.2006.08.007 * chapter 1.1, page 497 * ----- | 1-15 | |
| A | US 2007/174881 A1 (IDEHARA YUICHI [JP] ET AL) 26 July 2007 (2007-07-26) * paragraphs [0007], [0008] * * figures 1-9 * ----- | 1-15 | TECHNICAL FIELDS SEARCHED (IPC) H04L H04N |
| A | US 2005/018768 A1 (MABEY DANNY L [US] ET AL) 27 January 2005 (2005-01-27) * paragraph [0134] * * figures 2-4,9-12 * ----- | 1-15 | |
| A | WO 2008/027724 A (MICROSOFT CORP [US]) 6 March 2008 (2008-03-06) * paragraphs [0004] - [0008] * * paragraphs [0057], [0075] * * figures 1,3-6,10-12 * ----- | 1-15 | |

The present search report has been drawn up for all claims

| Place of search | Date of completion of the search | Examiner |
|---|---|---|
| Munich | 16 March 2012 | Bertsch, Andreas |

**ANNEX TO THE EUROPEAN SEARCH REPORT
ON EUROPEAN PATENT APPLICATION NO.**

EP 11 19 6071

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2012

| Patent document cited in search report | | | Publication date | Patent family member(s) | | Publication date |
|---|---|---|---|---|---|---|
| GB 2405768 | A | | 09-03-2005 | NONE | | |
| EP 1463323 | A | | 29-09-2004 | NONE | | |
| US 2007174881 | A1 | | 26-07-2007 | JP 4510005 B2 | | 21-07-2010 |
| | | | | US 2007174881 A1 | | 26-07-2007 |
| | | | | WO 2005086009 A1 | | 15-09-2005 |
| US 2005018768 | A1 | | 27-01-2005 | US 2005018768 A1 | | 27-01-2005 |
| | | | | US 2008069207 A1 | | 20-03-2008 |
| WO 2008027724 | A | | 06-03-2008 | EP 2060104 A1 | | 20-05-2009 |
| | | | | JP 2010503280 A | | 28-01-2010 |
| | | | | KR 20090060274 A | | 11-06-2009 |
| | | | | US 2008068446 A1 | | 20-03-2008 |
| | | | | WO 2008027724 A1 | | 06-03-2008 |

EPO FORM P0459

For more details about this annex : see Official Journal of the European Patent Office, No. 12/82